# EUROPEAN PATENT SPECIFICATION

(11) **EP 2 601 805 B1**
(45) Date of publication and mention of the grant of the patent: **18.05.2016**
(21) Application number: 12765195.8
(22) Date of filing: 31.03.2012
(51) Int. Cl.: H04W 36/00, H04W 76/02, H04L 12/24

(54) **FAILURE EVENT REPORT CORRELATION FOR DISTRIBUTED RAN SELF-ORGANIZATION**
KORRELATION VON FEHLEREREIGNISBERICHTEN FÜR VERTEILTE RAN-SELBSTORGANISATION
CORRÉLATION DE COMPTE RENDU DE DÉFAILLANCE POUR L'AUTO-ORGANISATION D'UN RAN DISTRIBUÉ

(30) Priority: 31.03.2011 US 201161470042 P; 30.03.2012 US 201213435234
(43) Date of publication of application: 12.06.2013
(60) Divisional application: 15185864.4
(73) Proprietor: MediaTek Inc., Taiwan 300 (TW)
(72) Inventor: JOHANSSON, Per Johan Mikael, 19634 Kungsangen (SE); CHEN, Yih-Shen, Hsinchu City Taiwan 300 (TW); LIN, Shiang-Jiun, Hsinchu City Taiwan 300 (TW)
(74) Representative: Hoefer & Partner Patentanwälte mbB
(86) International application number: PCT/CN2012/073386
(87) International publication number: WO 2012/130170

(56) References cited:
- EP-A1- 2 086 253
- WO-A1-2011/006376
- CN-A- 101 128 057
- CN-A- 101 212 775
- CN-A- 101 541 052
- US-A1- 2010 113 033
- US-A1- 2010 173 626
- US-A1- 2011 019 532

## Description

This application claims priority under 35 U.S.C. §119 from U.S. Provisional Application Number 61/470,042, entitled "Failure Event Report Correlation for Distributed RAN Self-Organization," filed on March 31, 2011.

### FIELD OF INVENTION

The disclosed embodiments relate generally to failure event reporting, and, more particularly, to failure event report correlation for distributed RAN self-organization networks (SON).

### BACKGROUND OF THE INVENTION

Self-organization is the process where a structure or pattern appears in a system without a central authority or external element imposing it through planning. The vision of self-organization networks (SON), which is in line with the views of 3GPP (3^{rd} Generation Partnership Project), is that future radio access network needs to be easier to plan, configure, manage, optimize, and heal compared to how it used to be. SON has been codified by the 3GPP Release 8 specifications in a series of standards. Newly added base stations should be self-configured in line with a 'plug-and-play' paradigm, while all operational base stations will regularly self-optimize parameters and algorithms behavior in response to observed network performance and radio conditions. Furthermore, self-healing mechanism can be triggered to temporarily compensate for a detected equipment outage, while awaiting a more permanent solution.

CN 101 128 057 A and US 2010/173626 A1 disclose communication network systems and methods which disclose a communication between base stations involved in a handover of a mobile user entity. In 3GPP networks, Mobility Optimization including MRO (Mobility Robustness Optimization) is a reactive self-optimization function executing in eNodeB that is assumed to optimize handover (HO) parameters. For example, eNodeB needs to optimize UE measurement configuration and HO algorithm behavior to find acceptable or as low as possible HO problem rate, as well as to find a balanced ping-pong rate or HO rate. In a too late HO problem, a connection failure occurs in the source cell before the handover was initiated or during a handover. The UE attempts to re-establish the radio link connection in the target cell (if handover was initiated) or in a cell that is not the source cell (if handover was not initiated). In a too early HO problem, a connection failure occurs shortly after a successful handover from a source cell to a target cell or during a handover. The UE attempts to re-establish the radio link connection in the source cell. In a wrong cell HO problem, a connection failure occurs shortly after a successful handover from a source cell to a target cell or during a handover. The UE attempts to re-establish the radio link connection in a cell other than the source cell and the target cell.

After a failure, e.g., a radio link failure (RLF) or handover failure (HOF), if UE can find another suitable cell of the same RAT, then UE will attempt radio resource control (RRC) re-establishment. According to existing Rel-9 procedures, after a successful re-establishment attempt, the network can use X2 RLF indication procedure to notify the eNB of the previous UE serving cell, and this eNB may do accounting based on this indication for mobility optimization. In Rel-10, the UE may do RLF report also after RRC establishment, e.g., after RRC re-establishment fails, possibly due to non-preparation, and when the subsequent NAS recovery succeeds.

However, there is no way for the network to correlate the subsequent RLF report with the UE context in the previous serving cell. Thus, if 3GPP goes ahead as proposed, then undoubtedly there will be double bookkeeping. First, statistics will be updated based on RRC re-establishment attempts (where RRC re-establishment fails), and statistics will again be updated based on UE RLF report. The Rel-9 and the suggested Rel-10 methods are not fully compatible with each other. Such double bookkeeping will make failure statistics unreliable, and may cause incorrect MRO actions.

Together with the contents in the RLF report, the network known information about the UE at the time of failure is essential in determining what should be the corrective actions for certain failures. For some failures, the most suitable corrective actions may be non-MRO actions, such as reconfiguration of interference coordination scheme or changes to power control etc. Because the UE context in the previous serving cell (e.g., its Cell Radio Network Temporary ID (C-RNTI)) is already known to the network, a solution is sought to always be able to correlate the network-known information with the RLF report to avoid double bookkeeping and to improve MRO decision for SON.

Another potential problem is that RLF reports may be delivered to a base-station very late, e.g. a day after the failure happened. Normally a base-station will not keep the UE context and keep the CRNTI of a UE non-reserved for a very long time, and normally a base-station has limited memory for such storage.

### SUMMARY OF THE INVENTION

A method of failure event report correlation according to the subject matter of the enclosed independent claims is proposed. The method supports correlation of network known information and a failure event report in cases when UE establishes a fresh RRC connection, e.g. after Idle mode or after being connected in another Radio Access Technology, and also takes into account that base stations have limited storage for old UE contexts.

A UE detects a failure event in a first cell served by a first base station, and the UE is assigned with a previous C-RNTI. The failure event may include a radio link failure, a handover failure, or a RACH failure. If the UE goes to Idle, e.g. due to a failed RRC re-establishment or the UE goes to another RAT and comes back, the UE then performs an RRC establishment procedure with a second base station, and the UE is assigned with a new C-RNTI. In some cases, the second and the first base stations could be the same. After the RRC establishment, the UE transmits a failure event report along with the correlation information to the second base station. The second base station then forwards the failure event report and the previous C-RNTI or other correlation information to the first base station. The first base station can correlate the failure event report with the previous failure event indication and with UE information stored in the base-station based on the previous C-RNTI or other correlation information to avoid double bookkeeping and improve MRO decision for SON.

In a first embodiment, the UE receives the correlation information from the second base station during an RRC re-establishment procedure, where the UE provides its previous C-RNTI. The correlation information can uniquely identify the UE. For example, the correlation information is contained in a new information element (IE) provided by the second base station in an RRC re-establishment reject message. The UE just echoes the correlation information back to the second base station later on, along with the failure event report. This is a very low overhead and simple method.

In a second embodiment, which is one specific example of the first embodiment, the UE receives and deduces the correlation information from a random access channel (RACH) procedure with the second base station during the RRC re-establishment procedure. The correlation information is based on the RACH resource used for the RRC re-establishment procedure. For example, the correlation information may include the RACH preamble and timing information such as the system frame number (SFN) used for the RACH transmission that was successful.

In another specific example, the UE receives the correlation information from the first base station during the ongoing RRC connection. The correlation information can uniquely identify the UE or identify a class of UEs. The class of UEs would typically be a group of UEs with similar handover and handover measurement parameter settings or parameters that affect how Handover signaling messages are transmitted. For example, the correlation information is contained in a new information element (IE) provided by the first base station in an RRC message. The UE just echoes the correlation information back to the second base station later on, along with the failure event report. This is a very low overhead and simple method.

In a third embodiment, the UE does not receive the correlation information from the base station during the RRC re-establishment procedure. When the UE transmits the failure event report, the UE also transmits an indication of the existence of the previous RRC re-establishment attempt to the second base station. For example, the indication may be a Boolean variable of {RRC REEST ATTEMPT = TRUE}. When the first base station receives such indication forwarded by the second base station, it may still be able to correlate the failure event report with the previous failure event.

In a fourth embodiment, the UE only provides the correlation information if it is fresh. In one example, the UE determines the freshness of the correlation information based on a timer, i.e., the time elapsed from the failure event to the failure event reporting should not exceed a certain threshold. In another example, the UE determines the freshness of the correlation information based on the knowledge that the UE has not dwelled on another RAT. If the correlation information is not fresh and no longer useful, then it is discarded by the UE. Instead, the UE may indicate the earlier RRC re-establishment attempt via a Boolean variable along with the failure event report.

Other embodiments and advantages are described in the detailed description below. This summary does not purport to define the invention. The invention is defined by the claims.

### BRIEF DESCRIPTION OF THE DRAWINGS

Figure 1 illustrates a wireless communication network with failure event report correlation in accordance with one novel aspect.
Figure 2 is a simplified block diagram of a user equipment in accordance with one novel aspect.
Figure 3 illustrates a first embodiment of reporting failure event with correlation information.
Figure 4 illustrates a second embodiment of reporting failure event with correlation information.
Figure 5 illustrates a third embodiment of reporting failure event with correlation information.
Figure 6 illustrates a fourth embodiment of reporting failure event with correlation information.
Figure 7 is a flow chart of a method of detecting and reporting failure event by a user equipment in accordance with one novel aspect.
Figure 8 is a flow chart of a method of handling failure event with correlation information by a base station in accordance with one novel aspect.

### DETAILED DESCRIPTION

Reference will now be made in detail to some embodiments of the invention, examples of which are illustrated in the accompanying drawings.

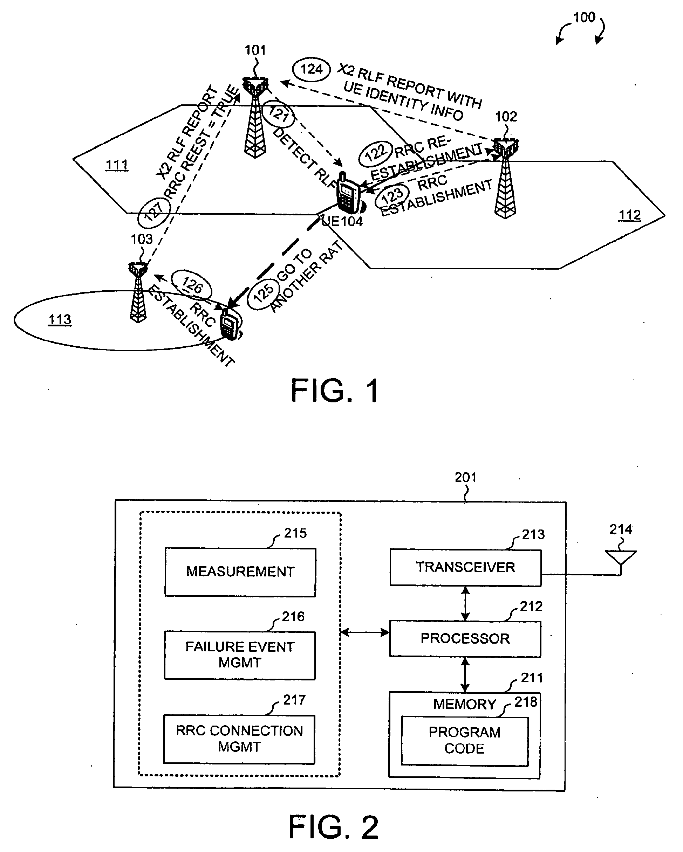

Figure 1 illustrates a wireless communication network 100 with failure event report and correlation in accordance with one novel aspect. Wireless communication network 100 comprises a plurality of base stations (eNB 101, eNB 102, and eNB 103) and a user equipment UE 104. UE 104 is originally served by eNB 101 in cell 111 and is in RRC_CONNECTED state. Later, UE 104 detects a radio link failure (RLF), and records radio signal measurement information before the RLF for later reporting (step 121). After detecting the failure event, UE 104 stays in RCC_CONNECTED mode and performs cell selection. Once a suitable cell is found, UE 104 attempts RRC re-establishment. For example, UE 104 selects cell 112 and performs RRC re-establishment with eNB 102 (step 122). The RRC re-establishment procedure is a quick and mostly-RAN-local procedure, and may work only if cell 112 is prepared, e.g., only if eNB 102 already has the UE context information. For example, the RRC re-establishment procedure will succeed if UE 104 tries to resetup the connection to the same eNB 101 where UE 104 was earlier connected, or if eNB 102 has been previously prepared by eNB 101 where UE 104 was previously connected (e.g., at handover or re-establishment preparation). In many other cases, however, there is little chance that the target cell has the UE context information. The RRC re-establishment message from the UE includes UE identification information such as the Cell Radio Network Temporary ID (C-RNTI) of the UE and the cell ID of the cell where the UE was previously connected.

During the RRC re-establishment, eNB 102 forwards an RLF indication along with UE identification information to the previous serving eNB 101 via X2 interface. If the RRC re-establishment fails, then UE 104 changes its state from RRC_CONNECTED to RRC_IDLE and may perform cell selection procedure. Once a suitable cell is found, UE 104 attempts RRC establishment. Usually, the same cell is selected as the one where the UE attempted RRC re-establishment. In one embodiment, eNB 102 sends certain correlation information {X} to UE 104 if the RRC re-establishment fails. The correlation information {X} is any information that can identify the UE as the UE that failed the RRC re-establishment.

In one embodiment of Figure 1, UE 104 selects cell 112 and performs RRC establishment with eNB 102 (step 123). As compared to the RRC re-establishment procedure, the RRC establishment procedure involves the core network to greater extent, takes slightly longer time, but assumes no prior knowledge of the UE in the RAN. RAN does not know whether the UE was previously connected because no such information is provided to the RAN. In fact, RAN has no ability to identify the UE and the UE is given a new C-RNTI. This also applies to the case when the RRC re-establishment has just failed and NAS-recovery triggers the RRC connection setup.

During the RRC establishment procedure, UE 104 indicates to eNB 102 that there is an RLF report available. Upon receiving an information request from eNB 102, UE 104 sends the RLF report along with the correlation information {X} to eNB 102. In one embodiment, based on the correlation information {X}, eNB 102 is able to determine the previous UE identity. In step 124, eNB 102 forwards the received RLF report, together with the previous UE identity, to the previous serving eNB 101 via X2 interface. This information enables eNB 101 to identify the UE in connection with the earlier RLF failure event, which was already indicated by eNB 102 to eNB 101 during the RRC re-establishment via X2 interface. Based on the provided information, eNB 101 can correlate the X2 RLF report with the earlier X2 RLF indication, and with previous UE context information that eNB 101 has stored.

In another embodiment of Figure 1, UE 104 goes to another radio access technology (RAT) (step 125). UE 104 may stay there for significant amount of time before attempting RRC establishment with eNB 103 (step 126). While UE 104 keeps the RLF information for later reporting, it discards any correlation information {X} because such information is no longer fresh and useful, because it is assumed that eNB 101 has discarded the stored UE context at this time. As a result, in step 127, eNB 103 simply forwards the RLF report to eNB 101 without UE identity information. Instead, UE 104 may indicate to eNB 103 that a previous RCC re-establishment procedure has failed, and eNB 103 forwards such indication to eNB 101 along with the RLF report. Based on such indication, eNB 101 may still be able to correlate the X2 RLF report with the earlier X2 RLF indication, or at least avoid double bookkeeping for the failure event.

RRC re-establishment is an optimized procedure built on the assumption that UE identifies itself in such a way that the UE context of the UE can be identified. On the other hand, RRC establishment, e.g., mobility with redirection, RAN does not know if/where UE was previously connected. Therefore, the strong benefit in providing a solution based on correlation is that: a) it is both backwards compatible with other solutions based on X2 RLF indication message and it is future proof; and b) it enables the combination of network knowledge and information reported by the UE in the failure event report, to make good quality conclusions, and to reduce requirement of the contents of the UE failure event report because information already known in the network does not need to be reported by the UE. The failure event is either radio link failure, handover failure, or RACH failure. Scenario would apply to all the cases because they may all be caused by mobility problems, and they may generate first a RRC re-establishment, then if failed a following RRC establishment triggered by NAS.

Figure 2 is a simplified block diagram of a user equipment UE 201 in accordance with one novel aspect. UE 201 comprises memory 211, a processor 212, a transceiver 213 coupled to an antenna 214. UE 201 also comprise various modules including a measurement module 215 that performs radio signal measurements, a failure event management module 216 that detects failure events and manages failure event reporting, and an RRC connection management module 217 that performs cell (re)selection and RRC (re)establishment procedures. The different modules are function modules that can be implemented by software, firmware, hardware, or any combination thereof. The function modules, when executed by the processor 212 (e.g., via executing program code 218), allow UE 201 to perform various functions accordingly. A base station may comprise similar structure including various function modules to support related functionalities.

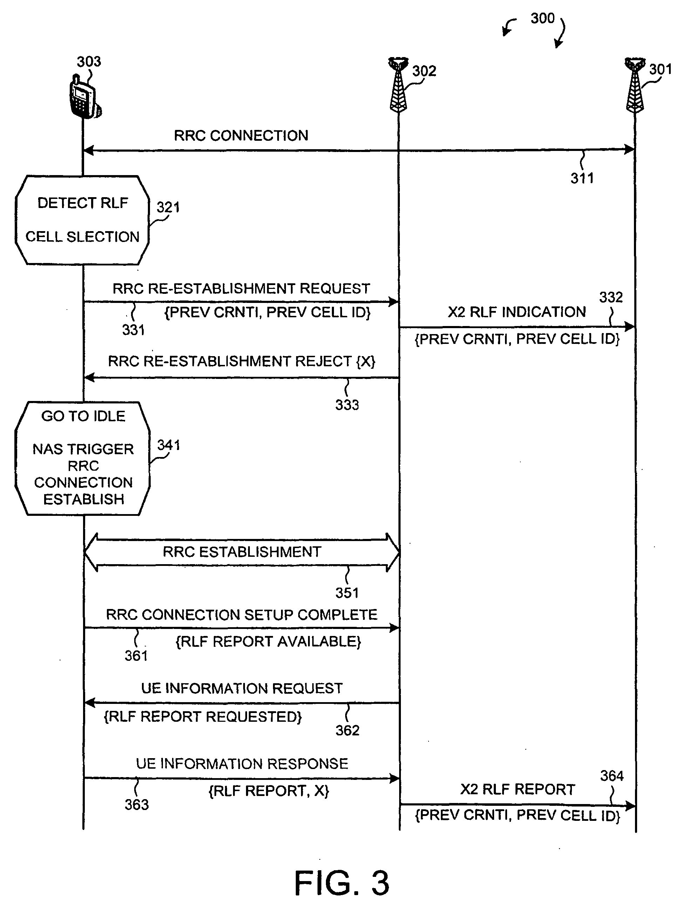

Figure 3 illustrates a first embodiment of reporting failure event with correlation information in a wireless communication network 300. Wireless communication network 300 comprises a first eNB 301, a second eNB 302, and a UE 303. Initially, UE 303 is in RRC_CONNECTED mode, and communicates with its serving eNB 301 in a serving cell over an established RRC connection (step 311). With the RRC connection, eNB 301 stores UE context information, which is associated with the identity of UE 303 with respect to the RRC connection. For example, the UE identity information may include the C-RNTI, the cell ID, and the message authentication code (MAC-I) for the RRC connection. Later, UE 303 detects a failure event such as an RLF in step 321. UE 303 records radio signal measurement information related to the RLF failure event for future reporting. The RLF report may include radio signal measurements (e.g., RSRP/RSRQ measurements) before the time of the RLF. UE 303 stays in RRC_CONNECTED mode and performs cell selection.

In step 331, UE 303 starts to perform RRC re-establishment with eNB 302 and sends an
RRC re-establishment request to eNB 302. The RRC re-establishment request contains the UE identity information with respect to the earlier RRC connection, such as the previous C-RNTI, the previous cell ID, and the previous MAC-I. Upon receiving the RRC re-establishment request, eNB 302 forwards an RLF indication to eNB 301 via X2 interface. The RLF indication contains the earlier UE identity so that eNB 301 can identify the corresponding UE. The RLF indication, however, does not contain the actual RLF report because no secure RRC connection has been established between UE 303 and eNB 302.

In the example of Figure 3, the RRC re-establishment procedure fails because eNB 302 has not been prepared before the re-establishment attempt. In step 333, eNB 302 sends an RRC re-establishment reject message to UE 303. In one novel aspect, the RRC re-establishment reject message also contains correlation information {X}, which may be contained in a new information element (IE). The correlation information {X} is any information that can be used by eNB 302 later to identify UE 303. Upon receiving the RRC re-establishment reject message, UE 303 goes to RRC_IDLE mode in step 341. NAS triggers RRC connection establishment immediately thereafter. Typically, if UE 303 does not quickly go away, then eNB 302 is still the target base station for UE 303.

In step 351, UE 303 performs RRC establishment procedure with eNB 302. The RRC establishment procedure is a heavy-weight procedure, during which the UE and the eNB performs various levels of downlink (DL) and uplink (DL) synchronization, negotiation and configuration, and finally establish a new RRC connection. RAN/eNB 302 does not know whether UE 303 was previously connected and failed because no such information is provided to the RAN/eNB 302. UE 303 is also assigned with a new C-RNTI. Upon the completion of the connection setup, in step 361, UE 303 sends an RRC connection setup complete message to eNB 302. This message also indicates to eNB 302 that UE 303 has an RLF report available. In step 362, eNB 302 sends a UE information request message to UE 303. The request message requests UE 303 to send the available RLF report. In step 363, UE 303 sends an information response message back to eNB 302. The response message contains the RLF report, along with the correlation information {X}.

Once eNB 302 received the RLF report and the correlation information {X}, eNB 302 can identify UE 303 based on the correlation information. More specifically, eNB 302 sends the correlation information {X} to UE 303 in the RRC re-establishment reject message (step 333), and now UE 303 simply echoes back the same correlation information {X} (step 363). The correlation information {X} is uniquely associated with the previous UE identity information, which is received in the RRC re-establishment request message in step 331. As a result, eNB 302 can identify UE 303 and obtain the previous UE identity information. In step 364, eNB 302 forwards the received RLF report to the previous serving eNB 301. In addition, eNB 302 also sends the previous UE identity information (e.g., previous C-RNTI, previous cell ID, and MAC-I) of UE 303 to eNB 301 via X2 interface.

Based on the UE identity, eNB 301 is able to correlate the received RLF report with the earlier RLF indication received in step 332 for the same UE 303, and with previous UE context stored in eNB 301, to avoid double bookkeeping. In addition, eNB 301 is able to make better MRO decision based on measurements contained in the RLF report. By using correlation, UE 303 is not burdened to keep track of and log the identity information or to add the UE identity information into the RLF report, because such information is already known in the network. Normally it is desirable to keep the UEs as simple as possible, and put as much complexity as possible in the network. The correlation information {X} is any information that can be used to identify a UE, or can be part of the UE identity information itself.

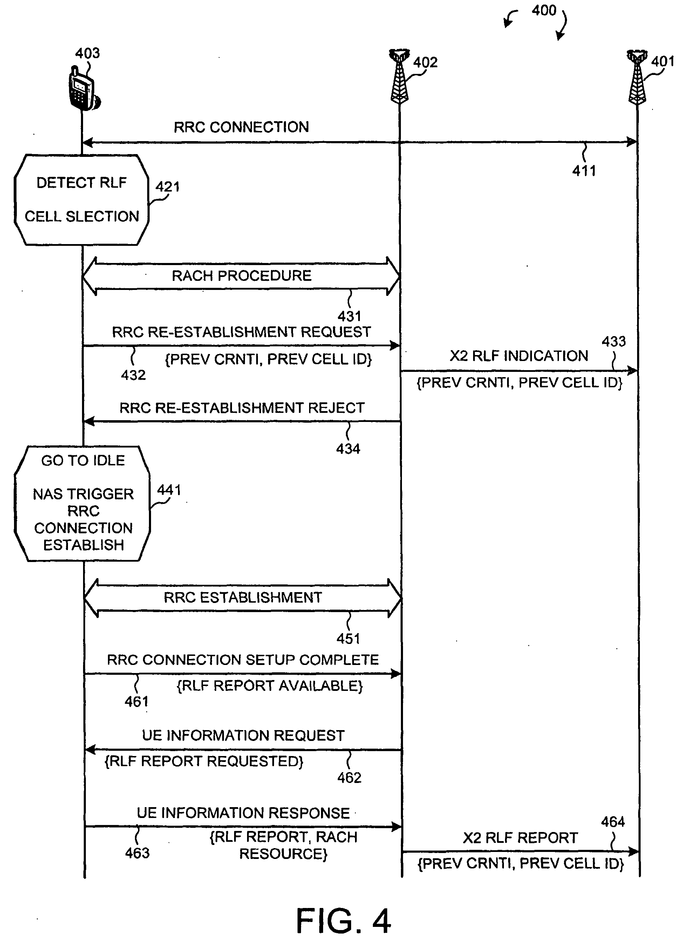

Figure 4 illustrates a second embodiment of reporting failure event with correlation information in a wireless communication network 400. Wireless communication network 400 comprises a first eNB 401, a second eNB 402, and a UE 403. Figure 4 is similar to Figure 3, where UE 403 was initially connected to eNB 401 (step 411), but is later connected to eNB 402 after detecting a failure event (step 421). In the example of Figure 4, however, a specific example of correlation information is illustrated. In step 431, UE 403 performs a random access channel (RACH) procedure with eNB 402 over certain RACH resource such as a certain RACH preamble code over a RACH opportunity with a certain system frame number (SFN) for RACH transmission. After successful RACH attempt, UE 403 sends a RRC re-establishment request to eNB 402 in step 432. The RRC re-establishment request includes the UE identity of UE 403 with respect to its previous connection with eNB 401. In step 433, eNB 402 forwards an RLF indication to eNB 401 via X2 interface. The RLF indication also contains the UE identity information so that eNB 401 can identify the corresponding UE.

Because eNB 402 has not been prepared, the RRC re-establishment procedure fails. In step 434, eNB 402 sends an RRC re-establishment reject message to UE 403. Step 441 through step 462 of Figure 4 is again similar to step 341 through step 362 of Figure 3. In step 463, UE 403 sends an information response message back to eNB 402. The response message contains the RLF report, along with the correlation information {RACH resource} of the successful RACH attempt. Because the RACH resource is typically uniquely associated with UE 403, eNB 402 will be able to identify UE 403 with such correlation information. Once eNB 402 received the RLF report and the correlation information {RACH resource}, it can identify the previous UE identity of UE 403 based on the correlation information. In step 464, eNB 401 receives the RLF report, as well as the previous UE identity of UE 403 (e.g., previous C-RNTI, previous cell ID, and MAC-I). Based on the UE identity, eNB 401 is able to determine that the received RLF report is related to the earlier RLF indication received in step 432 for the same UE 403 to avoid double bookkeeping. In addition, eNB 401 is able to make better MRO decision based on the detailed measurements contained in the RLF report.

In one specific example, UE 403 receives correlation information from the first base station eNB 401 during the ongoing RRC connection. The correlation information can uniquely identify the UE or identify a class of UEs that uses the same or similar parameters. For example, UE 403 receives the correlation information that is contained in a new information element (IE) provided by eNB 401 in an RRC message. UE 403 sends the correlation information to eNB 402 later on together with the failure event report, which is forwarded to eNB 401 along with the failure event report.

In another specific example, the second base station and the first base station could be the same. For example, the UE is first connected to a first cell served by the first base station, and then performs RRC connection setup with a second cell or event the same cell served by the same base station.

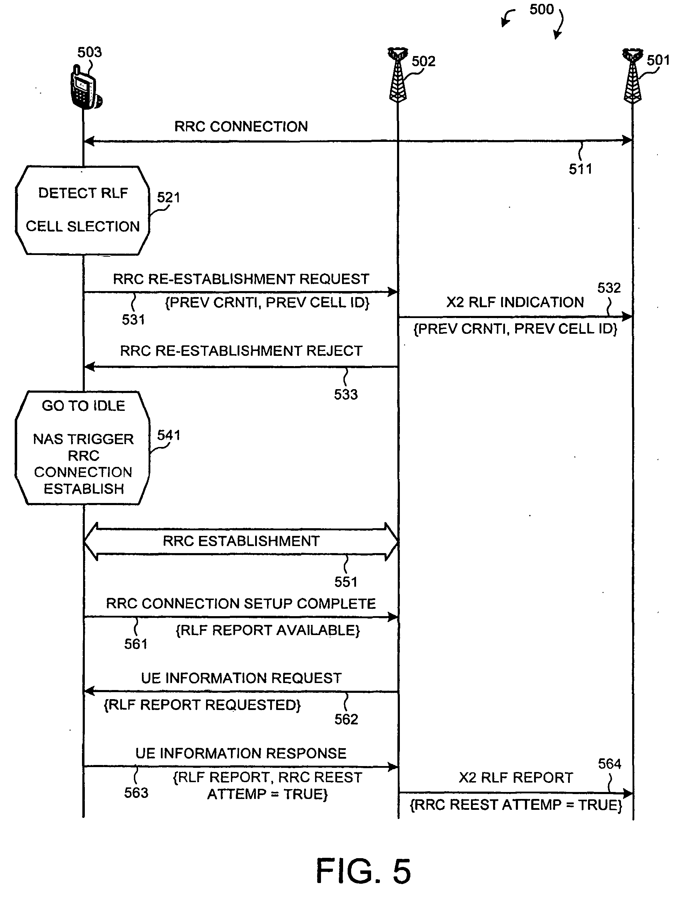

Figure 5 illustrates a third embodiment of reporting failure event with correlation information in a wireless communication network 500. Wireless communication network 500 comprises a first eNB 501, a second eNB 502, and a UE 503. Figure 5 is similar to Figure 3, where UE 503 was initially connected to eNB 501 (step 511), but is later connected to eNB 502 after detecting a failure event (step 521). In the example of Figure 5, however, eNB 502 does not provide any correlation information to UE 503 when RRC re-establishment fails (step 533). The other difference is in step 563. In step 563, UE 503 sends an information response message back to eNB 502. The response message contains the RLF report. The response message, however, does not any UE identity information. Instead, the response message includes an indication of the existence of the previous RRC re-establishment attempt. For example, the response message may contain a Boolean variable of {RRC REEST ATTEMPT = TRUE}. In step 564, eNB 501 receives the RLF report as well as the Boolean variable forwarded by eNB 502. Although eNB 501 does not know the exact UE identity associated with the RLF report, based on the Boolean variable, eNB 501 is still likely to be able to "guess" that the RLF report is related to a previous failure event indicated in step 532.

This is a simple way for UE to indicate that there may be case of double bookkeeping. The UE simply remembers and indicates that it performed a RRC re-establishment attempt following upon the failure event for which there is failure event information to report. Furthermore, UE only makes such indication if there was assurance that the RRC re-establishment request message was received by the RAN (e.g., step 531). The assurance can be an RLC acknowledgement (ACK), a MAC/HARQ ACK, or an RRC response message received such as an RRC re-establishment reject message (e.g., step 532). This is because the RRC re-establishment may fail for other reasons such as a bad radio connection, and the request message never has been properly delivered to the RAN. In such cases, no X2 RLF indication message is generated, and there is no risk that an RLF report delivered later would cause double bookkeeping. Thus by taking into account transmission failures, failure event statistics is more precise to reduce the number of bad MRO decisions.

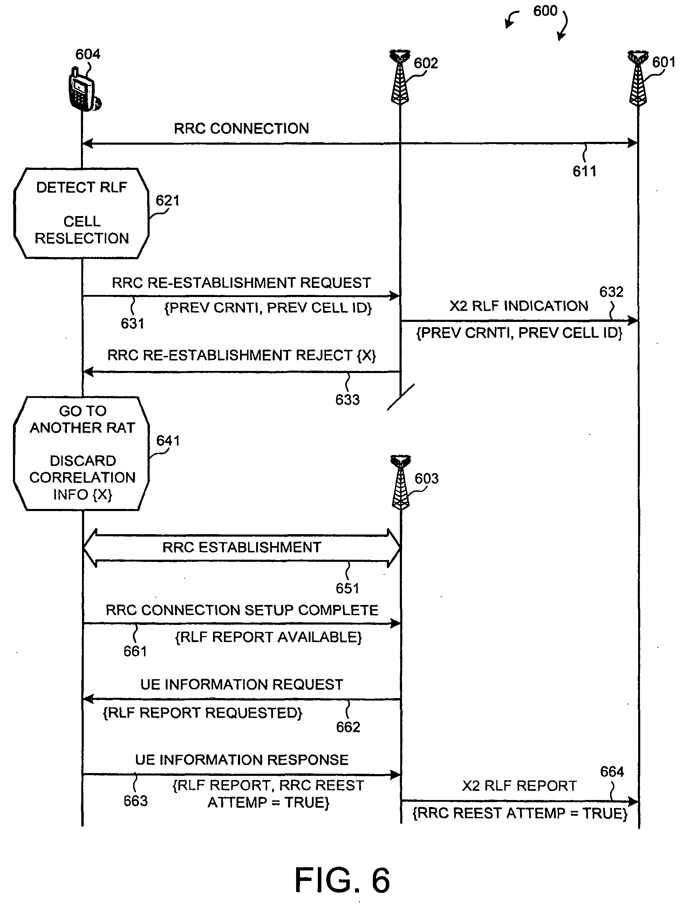

Figure 6 illustrates a fourth embodiment of reporting failure event with correlation information in a wireless communication network 600. Wireless communication network 500 comprises a first eNB 601, a second eNB 602, a third eNB 603, and a UE 604. Figure 6 is similar to Figure 3, where UE 604 was initially connected to eNB 601 (step 611), but later detects a failure event (step 621) and attempts an RRC re-establishment procedure with eNB 602 (step 631). UE 604 also receives correlation information {X} when RRC re-establishment fails (step 633). In the example of Figure 6, however, UE 604 does not attempt RRC establishment with eNB 602 immediately. Instead, UE 604 goes to RRC_IDLE mode, and then stays there for a while or goes to another RAT. While the RLF report may be kept by the UE for a long time (e.g., for up to 48 hours), the correlation information for the purpose of identifying UE and determining UE context is only useful if it is fresh, e.g., based on a timer or based on the knowledge that UE has not dwelled on another RAT.

In the example of Figure 6, UE 604 goes to another RAT. Therefore, UE 604 discards correlation information {X} because it is no longer fresh. Step 651 through step 662 of Figure 6 is again similar to step 351 through step 362 of Figure 3, with the only difference that UE 604 performs RRC establishment with a different eNB 603 in another RAT. In step 663, UE 604 sends an information response message back to eNB 603. The response message contains the RLF report, but no longer contains the already discarded correlation information {X}. Instead, similar to the third embodiment illustrated in Figure 5, the response message contains an indication of the existence of the previous RRC re-establishment attempt. For example, the response message may contain a Boolean variable of {RRC REEST ATTEMPT = TRUE}. In step 664, eNB 601 receives the RLF report as well as the Boolean variable forwarded by eNB 603. Although eNB 601 does not know the exact UE identity associated with the RLF report, based on the Boolean variable, eNB 601 is likely to be able to "guess" that the RLF report is related to a previous failure event indicated in step 632.

The benefit of providing correlation information only if fresh is two-fold. First, overhead can be reduced because the UE avoid providing the correlation information when not needed, i.e., when RAN has lost the UE context and correlation is no longer useful. Second, possible miss-correlation can be avoided, e.g., a new UE could have been allocated the C-RNTI used by another UE previously, and its context should not be correlated with a certain failure event report. Alternatively, the correlation information is provided only in the RRC connection immediately following a failed RRC re-establishment, i.e., the RRC connection that is result of NAS-recovery triggered RRC establishment. Such principle is extremely simple to implement, e.g., no timer is needed, and UE does not need to remember anything about another RAT.

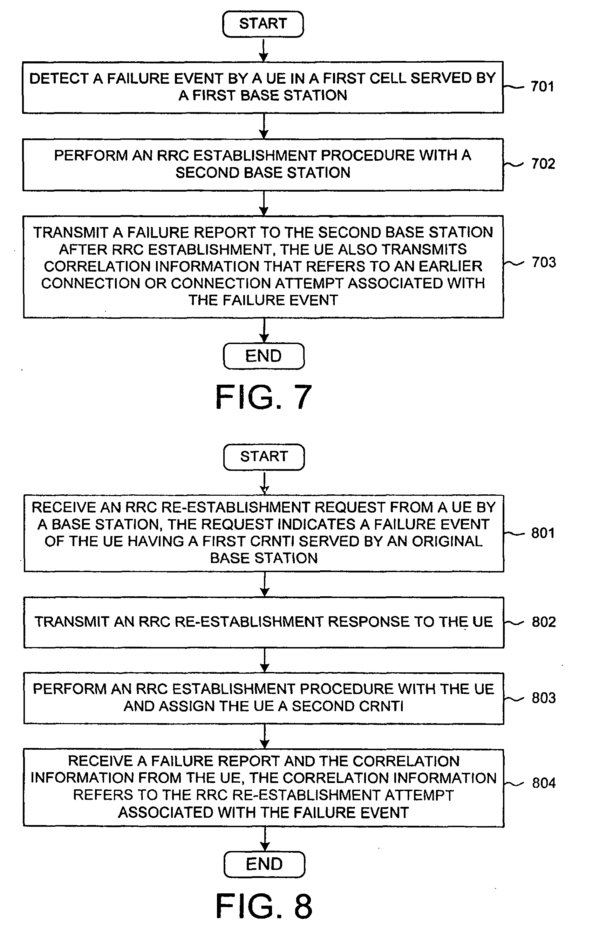

Figure 7 is a flow chart of a method of detecting and reporting failure event by a user equipment in accordance with one novel aspect. In step 701, the UE detects a failure event in a first cell served by a first base station. The failure event may include a radio link failure, a handover failure, or a RACH failure. In step 702, the UE performs an RRC establishment procedure in a second cell, which may be served by a second base station. In step 703, the UE transmits a failure event report to the second base station after RRC establishment. The UE also transmits correlation information of the failure event along with the failure event report, and the correlation information enables the base station to identify the UE with regard to the failure event.

Figure 8 is a flow chart of a method of handling failure event with correlation information by a base station in accordance with one novel aspect. In step 801, the base station receives an RRC re-establishment request from a UE. The request indicates a failure event of the UE having a first C-RNTI served by an original base station. In step 802, the base station transmits an RRC re-establishment response to the UE. In step 803, the base station performs RRC establishment procedure with the UE and assigns the UE a second C-RNTI. In step 804, the base station receives a failure event report as well as the correlation information from the UE. The correlation information refers to an earlier RRC re-establishment attempt associated with the failure event.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method for avoiding double bookkeeping in a wireless communication network (100), comprising:
Detecting (701) a failure event by a user equipment (104), named UE in the following, in a first cell served by a first base station;
Performing (702) a radio resource control, named RRC in the following, establishment procedure with a second cell served by a second base station; and **characterized by**
Transmitting (703) a failure event report corresponding to the detected failure event to the second base station after the RRC establishment, wherein the UE (104) also transmits correlation information, and wherein the correlation information (X) refers to an earlier connection or connection attempt associated with the failure event.

2. The method of Claim 1, further comprising:
performing an RRC re-establishment procedure with the second base station using a first cell radio network temporary identifier, named CRNTI in the following, before the RRC establishment procedure; and
receiving or deducing the correlation information (X) from the second base station, wherein the correlation information (X) is different from the first CRNTI.

3. The method of Claim 2, wherein the RRC re-establishment procedure includes a random access channel, named RACH in the following, procedure, and wherein the correlation information (X) contains RACH resource information of the RACH procedure;
wherein preferably the correlation information contains a RACH preamble or a system frame number used during the RACH procedure.

4. The method of Claim 1, wherein the UE (104) receives or deduces the correlation information (X) from the first base station, and wherein the correlation information (X) is different from the first CRNTI; or
wherein the correlation information (X) indicates whether the UE (104) has performed an RRC re-establishment attempt in the same cell.

5. The method of Claim 1, wherein the UE (104) transmits the correlation information upon satisfying a condition;
wherein preferably the UE (104) activates a timer upon detecting the failure event, and wherein the condition is not satisfied when the timer expires before transmitting the failure event report; or
wherein preferably the condition is not satisfied if the UE (104) performs a second RRC establishment procedure; or
wherein preferably the condition is not satisfied if the UE (104) connects to another Radio Access Technology, named RAT.

6. A user equipment (UE) adapted for avoiding double bookkeeping in a wireless communication network (100), comprising:
a failure event management module (216) that is adapted to detect a failure event in a first cell served by a first base station;
a connection management module (217) that is adapted to perform a radio resource control (RRC) establishment procedure with a second cell served by a second base station; and **characterized by**
a transceiver (213) that is adapted to transmit a failure event report corresponding to the detected failure event to the second base station after RRC establishment, wherein the transceiver (213) also transmits correlation information, and wherein the correlation information refers to the earlier connection or connection attempt associated with the failure event

7. The UE of Claim 6, wherein the connection management module performs an RRC re-establishment procedure with the second base station using a first cell radio network temporary identifier, named CRNTI in the following, before the RRC establishment procedure, wherein the UE (104) receives or deduces the correlation information (X) from the second base station, and wherein the correlation information (X) is different from the first CRNTI.

8. The UE of Claim 7, wherein the RRC re-establishment procedure includes a random access channel, named RACH in the following, procedure, and wherein the correlation information contains RACH resource information of the RACH procedure;
wherein preferably the correlation information (X) contains a RACH preamble or a system frame number used during the RACH procedure.

9. The UE of Claim 6, wherein the UE (104) receives or deduces the correlation information (X) from the first base station, and wherein the correlation information (X) is different from the first CRNTI; or
wherein the correlation information (X) indicates whether the UE (104) has performed an RRC re-establishment attempt in the same cell.

10. The UE of Claim 6, wherein the connection management module performs an RRC re-establishment procedure with the second base station before the RRC establishment procedure, and wherein the UE (104) transmits the correlation information (X) upon satisfying a condition;
wherein preferably the UE (104) activates a timer upon detecting the failure event, and wherein the condition is not satisfied when the timer expires before transmitting the failure event report; or
wherein preferably the condition is not satisfied if the UE (104) performs a second RRC establishment procedure; or
wherein preferably the condition is not satisfied if the UE (104) connects to another Radio Access Technology.

11. A method for avoiding double bookkeeping in a wireless communication network (100), comprising:
Receiving (801) a radio resource control, named RRC in the following, re-establishment request from a user equipment (104), named UE in the following, by a base station, wherein the request indicates a failure event of the UE (104) having a first cell radio network temporary identifier, named CRNTI in the following, served by an original base station;
Transmitting (802) an RRC re-establishment response to the UE (104);
Performing (803) an RRC establishment procedure with the UE (104) and assigning the UE a second CRNTI; and **characterized by**
Receiving (804) a failure event report and correlation information (X) from the UE (104), wherein the correlation information (X) refers to a RRC re-establishment attempt associated with the failure event.

12. The method of Claim 11, where the RRC re-establishment response to the UE (104) contains the correlation information (X) of the RRC re-establishment attempt.

13. The method of Claim 11, further comprising:
the original base-station providing the correlation information (X) of the failure event to the UE (104), that is different to the first CRNTI, and;
the base-station forwarding the failure event report to the original base station, wherein the base station also forwards the correlation information (X).

14. The method of Claim 11, further comprising:
forwarding the failure event report to the original base station, wherein the base station also forwards the first CRNTI based on the correlation information (X); or
forwarding the failure event report to the original base station, wherein the base station indicates to the original base station whether the UE (104) has performed the RRC re-establishment attempt.

15. The method of Claim 11, wherein the RRC re-establishment procedure includes a random access channel, named RACH in the following, procedure, and wherein the correlation information (X) contains RACH resource information of the RACH procedure;
wherein preferably the correlation information (X)contains a RACH preamble or a system frame number used during the RACH procedure.

## Patentansprüche

1. Verfahren zum Vermeiden einer Doppelbuchhaltung in einem drahtlosen Kommunikationsnetzwerk (100), umfassend:
Erfassen (701) eines Fehlerereignisses durch eine Benutzereinrichtung (104), nachfolgend als UE bezeichnet, in einer ersten Zelle, die von einer ersten Basisstation bedient wird;
Einrichtungsprozedur mit einer zweiten Zelle, die von einer zweiten Basisstation bedient wird; **gekennzeichnet durch**
Übertragen (703) eines Fehlerereignisberichts, der dem erfassten Fehlerereignis entspricht, an die zweite Basisstation nach der RRC-Einrichtung, wobei die UE (104) auch Korrelationsinformationen überträgt, und wobei sich die Korrelationsinformationen (X) auf eine frühere Verbindung oder einen Verbindungsversuch beziehen, die mit dem Fehlerereignis verbunden sind.

2. Verfahren nach Anspruch 1, ferner umfassend:
Ausführen einer RRC-Wiedereinrichtungsprozedur mit der zweiten Basisstation unter Verwendung einer temporären ersten Funkzellennetzwerkkennung, nachfolgend als CRNTI bezeichnet, vor der RRC-Einrichtungsprozedur; und
Empfangen und Ableiten der Korrelationsinformationen (X) von der zweiten Basisstation, wobei sich die Korrelationsinformationen (X) von der ersten CRNTI unterscheiden.

3. Verfahren nach Anspruch 2, wobei die RRC-Wiedereinrichtungsprozedur eine Direktzugriffskanal-, nachfolgend als RACH bezeichnet, Prozedur umfasst, und wobei die Korrelationsinformationen (X) RACH-Ressourceninformationen der RACH-Prozedur enthalten;
wobei die Korrelationsinformationen vorzugsweise eine RACH-Präambel oder eine Systemframenummer enthalten, die während der RACH-Prozedur verwendet wird.

4. Verfahren nach Anspruch 1, wobei die UE (104) die Korrelationsinformationen (X) von der ersten Basisstation empfängt oder ableitet, und wobei sich die Korrelationsinformationen (X) von der ersten CRNTI unterscheiden; oder
wobei die Korrelationsinformationen (X) kennzeichnen, ob die UE (104) einen RRC-Wiedereinrichtungsversuch in der gleichen Zelle ausgeführt hat.

5. Verfahren nach Anspruch 1, wobei die UE (104) die Korrelationsinformationen nach dem Erfüllen einer Bedingung überträgt;
wobei die UE (104) vorzugsweise einen Timer nach dem Erfassen des Fehlerereignisses aktiviert, und wobei die Bedingung nicht erfüllt ist, wenn der Timer vor dem Übertragen des Fehlerereignisberichts abläuft; oder
wobei die Bedingung vorzugsweise nicht erfüllt ist, wenn die UE (104) eine zweite RRC-Einrichtungsprozedur ausführt; oder
wobei die Bedingung vorzugsweise nicht erfüllt ist, wenn die UE (104) sich mit einer anderen Funkzugangstechnologie, die als RAT bezeichnet wird, verbindet.

6. Nutzereinrichtung (UE), die zum Vermeiden einer Doppelbuchhaltung in einem drahtlosen Kommunikationsnetzwerk (100) eingerichtet ist, umfassend:
ein Fehlerereignismanagementmodul (216), das zum Erfassen eines Fehlerereignisses in einer ersten Zelle eingerichtet ist, die von einer ersten Basisstation bedient wird;
ein Verbindungsmanagementmodul (217) das zum Durchführen einer Funkressourcensteuerung-(RRC-) Einrichtungsprozedur mit einer zweiten Zelle eingerichtet ist, die von einer zweiten Basisstation bedient wird; und **gekennzeichnet ist durch**
einen Sendeempfänger (213), der zum Übertragen eines Fehlerereignisberichts, der dem erfassten Fehlerereignis entspricht, an die zweite Basisstation nach der RRC-Einrichtung eingerichtet ist, wobei der Sendeempfänger (213) auch Korrelationsinformationen überträgt, und wobei die Korrelationsinformationen sich auf die frühere Verbindung oder einen Verbindungsversuch bezieht, der mit dem Fehlerereignis verbunden ist.

7. UE nach Anspruch 6, wobei das Verbindungsmanagementmodul eine RRC-Wiedereinrichtungsprozedur mit der zweiten Basisstation unter Verwendung einer temporären ersten Funkzellennetzwerkkennung, nachfolgend als CRNTI bezeichnet, vor der RRC-Einrichtungsprozedur durchführt, wobei die UE (104) die Korrelationsinformationen (X) von der zweiten Basisstation empfängt oder ableitet und wobei sich die Korrelationsinformationen (X) von der ersten CRNTI unterscheiden.

8. UE nach Anspruch 7, wobei die RRC-Wiedereinrichtungsprozedur eine Direktzugriffskanal-, nachfolgend als RACH bezeichnet, Prozedur umfasst, und wobei die Korrelationsinformationen RACH-Ressourceninformationen der RACH-Prozedur enthalten;
wobei die Korrelationsinformationen (X) vorzugsweise eine RACH-Präambel oder eine Systemframenummer enthalten, die während der RACH-Prozedur verwendet wird.

9. UE nach Anspruch 6, wobei die UE (104) die Korrelationsinformationen (X) von der ersten Basisstation empfängt oder ableitet, und wobei sich die Korrelationsinformationen (X) von der ersten CRNTI unterscheiden; oder
wobei die Korrelationsinformationen (X) kennzeichnen, ob die UE (104) einen RRC-Wiedereinrichtungsversuch in der gleichen Zelle ausgeführt hat.

10. UE nach Anspruch 6, wobei das Verbindungsmanagementmodul eine RRC-Wiedereinrichtungsprozedur mit der zweiten Basisstation vor der RRC-Einrichtungsprozedur durchführt, und wobei die UE (104) die Korrelationsinformationen (X) nach dem Erfüllen einer Bedingung überträgt;
wobei die UE (104) vorzugsweise einen Timer nach dem Erkennen des Fehlerereignisses aktiviert, und wobei die Bedingung nicht erfüllt ist, wenn der Timer vor dem Übertragen des Ereignisfehlerberichts abläuft; oder
wobei die Bedingung vorzugsweise nicht erfüllt ist, wenn die UE (104) eine zweite RRC-Einrichtungsprozedur durchführt; oder
wobei die Bedingung vorzugsweise nicht erfüllt ist, wenn die UE (104) sich mit einer anderen Funkzugangstechnologie verbindet.

11. Verfahren zum Vermeiden einer doppelten Buchhaltung in einem drahtlosen Kommunikationsnetzwerk (100), umfassend:
Empfangen (801) durch eine Funkressourcensteuerungs-, nachfolgend als RRC bezeichnet, Wiedereinrichtungsanforderung von einer Nutzereinrichtung (104), nachfolgend als UE bezeichnet, durch eine Basisstation, wobei die Anforderung ein Fehlerereignis der UE (104) mit einer temporären ersten Funkzellennetzwerkkennung, nachfolgend als CRNTI bezeichnet, kennzeichnet, die von einer ursprünglichen Basisstation bedient wird;
Übertragen (802) einer RRC-Wiedereinrichtungsantwort an die UE (104);
Durchführen (803) einer RRC-Einrichtungsprozedur mit der UE (104) und Zuweisen einer zweiten CRNTI an die UE; **gekennzeichnet durch**
Empfangen (804) eines Fehlerereignisberichts und von Korrelationsinformationen (X) von der UE (104), wobei sich die Korrelationsinformationen (X) auf einen RRC-Wiedereinrichtungsversuch beziehen, der mit dem Fehlerereignis verbunden ist.

12. Verfahren nach Anspruch 11, wobei die RRC-Wiedereinrichtungsantwort an die UE (104) die Korrelationsinformationen (X) des RRC-Wiedereinrichtungsversuchs enthält.

13. Verfahren nach Anspruch 11, ferner umfassend:
die ursprüngliche Basisstation stellt die Korrelationsinformationen (X) des Fehlerereignisses der UE (104) bereit, die sich von der ersten CRNTI unterscheiden, und;
die Basisstation übermittelt den Fehlerereignisbericht an die ursprüngliche Basisstation, wobei die Basisstation auch die Korrelationsinformationen (X) übermittelt.

14. Verfahren nach Anspruch 11, ferner umfassend:
Weiterleiten des Fehlerereignisberichts an die ursprüngliche Basisstation, wobei die Basisstation auch die erste CRNTI basierend auf den Korrelationsinformationen (X) weiterleitet; oder
Weiterleiten des Fehlerereignisberichts an die ursprüngliche Basisstation, wobei die Basisstation der ursprünglichen Basisstation angibt, ob die UE (104) den RRC-Wiedereinrichtungsversuch ausgeführt hat.

15. Verfahren nach Anspruch 11, wobei die RRC-Wiedereinrichtungsprozedur eine Direktzugriffkanal-, nachfolgend als RACH bezeichnet, Prozedur umfasst, und wobei die Korrelationsinformationen (X) RACH-Ressourceninformationen der RACH-Prozedur enthalten;
wobei die Korrelationsinformationen (X) vorzugsweise eine RACH-Präambel oder eine System-Framenummer enthalten, die während der RACH-Prozedur verwendet wird.

## Revendications

1. Procédé permettant d'éviter le double archivage dans un réseau de communication sans fil (100), comprenant le fait :
de détecter (701) un événement de défaillance par un équipement utilisateur (104), nommé UE dans ce qui suit, dans une première cellule desservie par une première station de base ;
d'effectuer (702) une procédure d'établissement de commande de ressource radio, nommée RRC dans ce qui suit, avec une deuxième cellule desservie par une deuxième station de base ; et **caractérisé par** le fait
de transmettre (703) un rapport d'événement de défaillance correspondant à l'événement de défaillance détecté à la deuxième station de base après l'établissement de RRC, où l'UE (104) transmet également de l'information de corrélation, et où l'information de corrélation (X) se réfère à une connexion antérieure ou à une tentative de connexion associée à l'événement de défaillance.

2. Procédé de la revendication 1, comprenant en outre le fait :
d'effectuer une procédure de rétablissement de RRC avec la deuxième station de base en utilisant un premier identifiant temporaire de réseau radio de cellule, nommé CRNTI dans ce qui suit, avant la procédure d'établissement de RRC ; et
de recevoir ou de déduire l'information de corrélation (X) de la deuxième station de base, où l'information de corrélation (X) est différente du premier CRNTI.

3. Procédé de la revendication 2, dans lequel la procédure de rétablissement de RRC comporte une procédure de canal d'accès aléatoire, nommé RACH dans ce qui suit, et dans lequel l'information de corrélation (X) contient l'information de ressource de RACH de la procédure de RACH ;
dans lequel de préférence l'information de corrélation contient un préambule RACH ou un numéro de trame de système utilisé au cours de la procédure de RACH.

4. Procédé de la revendication 1, dans lequel l'UE (104) reçoit ou déduit l'information de corrélation (X) de la première station de base, et dans lequel l'information de corrélation (X) est différente du premier CRNTI ; ou
dans lequel l'information de corrélation (X) indique si l'UE (104) a effectué une tentative de rétablissement de RRC dans la même cellule.

5. Procédé de la revendication 1, dans lequel l'UE (104) transmet l'information de corrélation suite à la satisfaction d'une condition ;
dans lequel de préférence l'UE (104) active un temporisateur lors de la détection de l'événement de défaillance, et dans lequel la condition n'est pas satisfaite lorsque le temporisateur expire avant de transmettre le rapport d'événement de défaillance ; ou
dans lequel de préférence la condition n'est pas satisfaite si l'UE (104) effectue une deuxième procédure d'établissement de RRC ; ou
dans lequel de préférence la condition n'est pas satisfaite si l'UE (104) se connecte à une autre Technologie d'Accès Radio, nommée RAT.

6. Équipement utilisateur (UE) adapté pour éviter le double archivage dans un réseau de communication sans fil (100), comprenant :
un module de gestion d'événement de défaillance (216) qui est adapté pour détecter un événement de défaillance dans une première cellule desservie par une première station de base ;
un module de gestion de connexion (217) qui est adapté pour effectuer une procédure d'établissement de commande de ressource radio (RRC) avec une deuxième cellule desservie par une deuxième station de base ; et **caractérisé par**
un émetteur-récepteur (213) qui est adapté pour transmettre un rapport d'événement de défaillance correspondant à l'événement de défaillance détecté à la deuxième station de base après l'établissement de RRC, où l'émetteur-récepteur (213) transmet également de l'information de corrélation, et où l'information de corrélation se réfère à la connexion antérieure ou à la tentative de connexion associée à l'événement de défaillance.

7. UE de la revendication 6, dans lequel le module de gestion de connexion effectue une procédure de rétablissement de RRC avec la deuxième station de base en utilisant un premier identifiant temporaire de réseau radio de cellule, nommé CRNTI dans ce qui suit, avant la procédure d'établissement de RRC, où l'UE (104) reçoit ou déduit l'information de corrélation (X) de la deuxième station de base, et où l'information de corrélation (X) est différente du premier CRNTI.

8. UE de la revendication 7, dans lequel la procédure de rétablissement de RRC comporte une procédure de canal d'accès aléatoire, nommé RACH dans ce qui suit, et dans lequel l'information de corrélation contient de l'information de ressource de RACH de la procédure de RACH ;
dans lequel de préférence l'information de corrélation (X) contient un préambule RACH ou un numéro de trame de système utilisé au cours de la procédure de RACH.

9. UE de la revendication 6, dans lequel l'UE (104) reçoit ou déduit l'information de corrélation (X) de la première station de base, et dans lequel l'information de corrélation (X) est différente du premier CRNTI ; ou
dans lequel l'information de corrélation (X) indique si l'UE (104) a effectué une tentative de rétablissement de RRC dans la même cellule.

10. UE de la revendication 6, dans lequel le module de gestion de connexion effectue une procédure de rétablissement de RRC avec la deuxième station de base avant la procédure d'établissement de RRC, et dans lequel l'UE (104) transmet l'information de corrélation (X) suite à la satisfaction d'une condition ;
dans lequel de préférence l'UE (104) active un temporisateur lors de la détection de l'événement de défaillance, et dans lequel la condition n'est pas satisfaite lorsque le temporisateur expire avant de transmettre le rapport d'événement de défaillance ; ou
dans lequel de préférence la condition n'est pas satisfaite si l'UE (104) effectue une deuxième procédure d'établissement de RRC ; ou
dans lequel de préférence la condition n'est pas satisfaite si l'UE (104) se connecte à une autre Technologie d'Accès Radio.

11. Procédé permettant d'éviter le double archivage dans un réseau de communication sans fil (100), comprenant le fait :
de recevoir (801) une demande de rétablissement de commande de ressource radio, nommé RRC dans ce qui suit, d'un équipement utilisateur (104), nommé UE dans ce qui suit, par une station de base, où la demande indique un événement de défaillance de l'UE (104) ayant un premier identifiant temporaire de réseau radio de cellule, nommé CRNTI dans ce qui suit, desservi par une station de base d'origine ;
de transmettre (802) une réponse de rétablissement de RRC à l'UE (104) ;
d'effectuer (803) une procédure d'établissement de RRC avec l'UE (104) et d'attribuer un deuxième CRNTI à l'UE ; et **caractérisé par** le fait
de recevoir (804) un rapport d'événement de défaillance et des informations de corrélation (X) de l'UE (104), où l'information de corrélation (X) se réfère à une tentative de rétablissement de RRC associée à l'événement de défaillance.

12. Procédé de la revendication 11, dans lequel la réponse de rétablissement de RRC à l'UE (104) contient l'information de corrélation (X) de la tentative de rétablissement de RRC.

13. Procédé de la revendication 11, comprenant en outre :
la station de base d'origine fournissant l'information de corrélation (X) de l'événement de défaillance à l'UE (104), qui est différente du premier CRNTI, et ;
la station de base transférant le rapport d'événement de défaillance à la station de base d'origine, où la station de base transfère également l'information de corrélation (X).

14. Procédé de la revendication 11, comprenant en outre le fait :
de transférer le rapport d'événement de défaillance à la station de base d'origine, où la station de base transfère également le premier CRNTI sur la base de l'information de corrélation (X) ; ou
de transférer le rapport d'événement de défaillance à la station de base d'origine, où la station de base indique à la station de base d'origine si l'UE (104) a effectué la tentative de rétablissement de RRC.

15. Procédé de la revendication 11, dans lequel la procédure de rétablissement de RRC comporte une procédure de canal d'accès aléatoire, nommé RACH dans ce qui suit, et dans lequel l'information de corrélation (X) contient de l'information de ressource de RACH de la procédure de RACH ;
dans lequel de préférence l'information de corrélation (X) contient un préambule RACH ou un numéro de trame de système utilisé au cours de la procédure de RACH.
